Europäisches Patentamt

European Patent Office

Office européen des brevets

(19)

(11) Numéro de publication : **0 076 194 B1**

(12) **FASCICULE DE BREVET EUROPÉEN**

(45) Date de publication du fascicule du brevet :
**16.04.86**

(51) Int. Cl.⁴ : **H 01 Q 3/08, F 16 F 15/28**

(21) Numéro de dépôt : **82401686.9**

(22) Date de dépôt : **16.09.82**

(54) **Système d'équilibrage d'un couple de balourd, utilisation d'un tel système pour une antenne de radar aéroporté, et antenne équilibrée par un tel système.**

(30) Priorité : **25.09.81 FR 8118137**

(43) Date de publication de la demande :
**06.04.83 Bulletin 83/14**

(45) Mention de la délivrance du brevet :
**16.04.86 Bulletin 86/16**

(84) Etats contractants désignés :
**DE GB IT**

(56) Documents cités :
**DE-B- 1 274 787**
**FR-A- 321 466**
**FR-A- 1 457 506**
**FR-A- 1 594 899**
**FR-A- 2 437 538**
**GB-A- 1 037 794**
**US-A- 2 408 825**
**US-A- 3 125 888**
**US-A- 3 889 551**

(73) Titulaire : **THOMSON-CSF**
**173, Boulevard Haussmann**
**F-75379 Paris Cedex 08 (FR)**

(72) Inventeur : **Estang, Bernard**
**THOMSON-CSF SCPI 173, bld Haussman**
**F-75379 Paris Cedex 08 (FR)**

(74) Mandataire : **Benoit, Monique et al**
**THOMSON-CSF SCPI 19, avenue de Messine**
**F-75008 Paris (FR)**

EP 0 076 194 B1

## Description

La présente invention concerne un système d'équilibrage d'un couple de balourd, son utilisation pour l'équilibrage d'une antenne de radar aéroporté et une antenne équilibrée par un tel système.

Certains mécanismes animés d'un mouvement de rotation sont parfois soumis à des accélérations variables. Lorsqu'ils sont placés en porte-à-faux par rapport à l'axe de rotation, il est nécessaire d'équilibrer le balourd ainsi créé.

C'est en particulier le cas d'une antenne de radar aéroporté qui est orientable suivant trois axes orthogonaux. L'axe portant l'antenne doit loger des éléments tels que moteurs, les éléments de recopie d'angle ou joints tournants. L'antenne est donc placée en porte-à-faux complet par rapport à cet axe. Le porte-à-faux est souvent très important et peut atteindre quinze centimètres pour de grandes antennes.

Au cours d'un virage ou d'une ressource, l'avion porteur peut imposer à l'antenne des facteurs de charge pouvant atteindre 10 g. La masse de l'antenne et par conséquent le couple de balourd lorsqu'il n'est pas équilibré, se trouvent multipliés par ce facteur. Le balourd peut alors dépasser le couple moteur maximal possible.

Dans l'art antérieur, l'équilibrage d'une pièce en rotation autour d'un axe est réalisé par des masses portées par le dispositif d'attache de la pièce mobile à l'opposé de ladite pièce par rapport à l'axe de rotation considéré. Les masses d'équilibrage peuvent constituer une gêne, que ce soit par leur masse même qui vient s'ajouter à la masse du mécanisme en rotation, ou par leur volume qui limite l'ampleur du mouvement de rotation.

Il est également connu, d'après les brevets FR-A-2 437 538, et GB-A-1 037 794 de réaliser un système d'équilibrage d'un élément disposé en porte à faux par rapport à son axe de rotation, en utilisant une masse d'équilibrage placée à distance de la pièce d'attache de cet élément à son axe de rotation, et des moyens de transmission des mouvements de rotation de l'élément en porte à faux à la masse d'équilibrage. Dans le cas du brevet FR-A-2 437 538, les moyens de transmission sont tels que la loi de mouvement de la masse d'équilibrage est tout à fait différente de celle de l'élément à équilibrer, la masse d'équilibrage étant animée d'un mouvement rectiligne alors que l'élément à équilibrer est animé d'un mouvement de rotation.

Dans le cas du brevet GB-A-1 037 794, les moyens de transmission sont constitués par des liaisons rigides qui lient rigidement la masse d'équilibrage à la pièce d'attache de l'élément à équilibrer, ce qui présente des inconvénients au plan de la tenue vibratoire et de la tenue mécanique.

Suivant l'invention, le système d'équilibrage d'un couple de balourd pour un élément disposé en porte à faux par rapport à un axe de rotation fixe autour duquel il peut pivoter, comportant une masse d'équilibrage placée à distance de la pièce d'attache de cet élément à son axe de rotation et des moyens de transmission des mouvements de rotation de l'élément en porte à faux à la masse d'équilibrage, est caractérisé en ce que ces moyens de transmission sont des liaisons souples qui imposent au centre de gravité de la masse d'équilibrage un mouvement de rotation autour d'un axe de rotation fixe et parallèle à l'axe de rotation de l'élément en porte à faux et suivant un déplacement angulaire opposé à celui du centre de gravité de l'élément en porte à faux.

La présente invention sera mieux comprise à la lecture de la description détaillée faite ci-après avec référence aux dessins ci-annexés qui représentent :

la figure 1 une vue latérale en coupe d'un système d'équilibrage de balourd selon l'art antérieur, appliqué à un mécanisme d'antenne ;

la figure 2 la vue latérale en coupe d'un mode de réalisation préférentiel du système d'équilibrage de balourd selon l'invention, appliqué à un mécanisme d'antenne ;

la figure 3 la vue latérale en coupe d'une variante de mode de réalisation préférentiel représenté par la figure 2.

Les figures ci-annexées représentent l'application particulière aux antennes de radar aéroporté des systèmes d'équilibrage de balourd selon l'art antérieur et selon l'invention. Mais cette application particulière ne constitue pas un exemple limitatif d'application.

Dans les différentes figures, les mêmes références désignent des éléments identiques ou jouant le même rôle. C'est ainsi que la référence 1 désigne l'antenne articulée entre les deux bras 2 du support d'antenne (représenté partiellement), selon trois axes orthogonaux par l'intermédiaire de deux pièces mobiles l'une par rapport à l'autre 3 et 4. La pièce d'attache 4 est solidaire de l'antenne 1. L'ensemble d'antenne 1, 2, 3, 4 et le mécanisme d'orientation lui-même ne constituant pas l'objet de l'invention ne seront pas décrits en détails.

Les figures annexées 1, 2, 3 sont des vues latérales en coupe suivant un plan vertical P passant par le centre de rotation O. Les trois axes de rotation sont désignés par x'Ox, axe horizontal transversal représenté uniquement par sa trace O sur le plan P, y'Oy, axe vertical, et z'Oz, axe horizontal longitudinal.

L'antenne 1 pivote autour du premier axe x'Ox avec un angle $\pm O$ par rapport au plan (x'Ox, z'Oz), autour du second axe y'Oy avec un angle $\pm \alpha$ par rapport au plan (x'Ox, y'Oy) et autour du troisième axe de rotation z'Oz avec un angle $\pm \beta$ par rapport au plan (y'Oy, z'Oz).

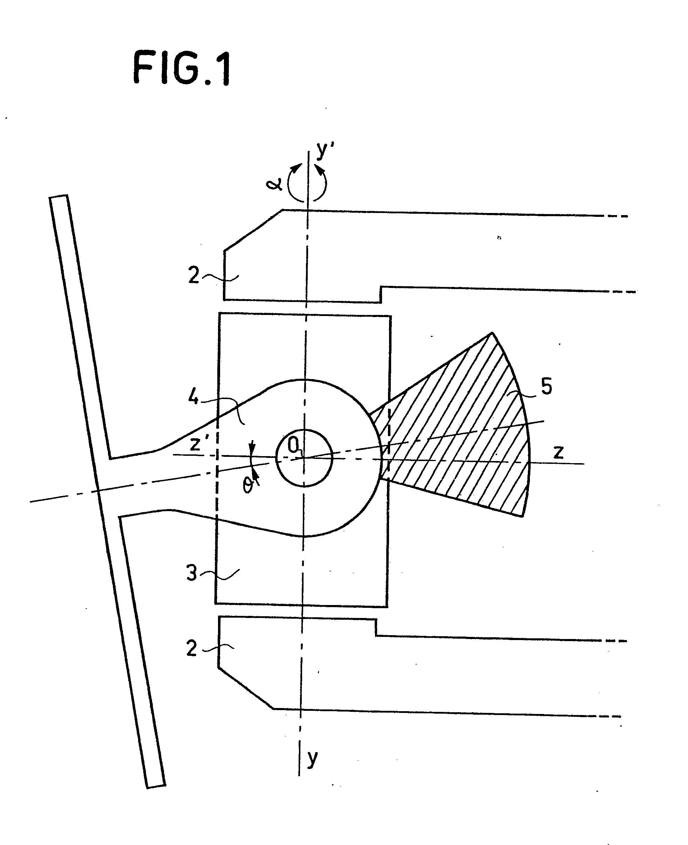

La figure 1 représente la vue latérale d'un système d'équilibrage selon l'art antérieur.

L'équilibrage du balourd d'antenne est réalisé à l'aide d'une masse 5 fixée à la pièce d'attache 4 de l'autre côté de l'antenne par rapport au centre de rotation 0. La masse agit directement sur l'axe de rotation x'Ox et son volume limite le débattement de l'antenne en θ et α.

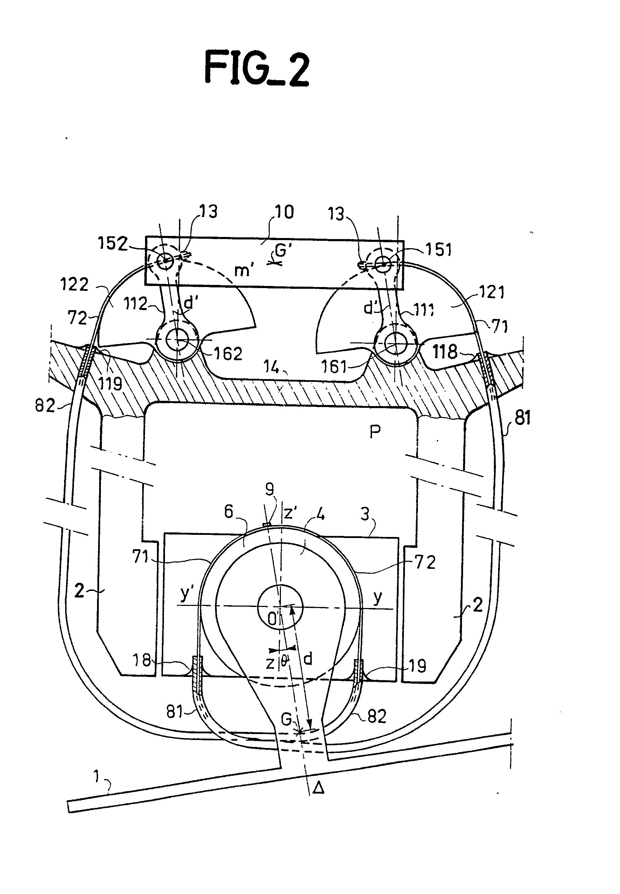

La figure 2 représente la coupe verticale d'un mode de réalisation préférentiel du système d'équilibrage conforme à l'invention.

La pièce d'attache 4 est solidaire et de même axe de rotation x'Ox qu'une poulie verticale 6. L'ensemble formé par l'antenne 1 et la poulie 6 présente un plan de symétrie (Δ, x'Ox) orthogonal au plan vertical de coupe P et représenté par sa trace Δ.

Deux câbles 71 et 72, coulissant dans une gaine 81 et 82 respectivement, sont fixés par des moyens 9 en un point de la circonférence de la poulie situé sur l'axe de symétrie Δ et de l'autre côté du centre de rotation 0 par rapport à l'antenne 1.

Les gaines 81 et 82 sont fixées sur la structure support d'antenne 3 par des moyens 18 et 19 respectivement.

Le système d'équilibrage conforme à l'invention comprend également, à l'intérieur du caisson de structure de la mécanique d'antenne (représenté partiellement en 14 et solidaire des bras 2), une masse d'équilibrage fixée par l'intermédiaire de deux biellettes 111 et 112 au caisson de structure 14. Le point d'attache de la première tête de chaque biellette 111, respectivement 112, à la masse 10 est désigné par la référence 151, respectivement 152. Le point d'attache de la deuxième tête de la biellette 111, respectivement 112, au caisson de structure 14 est désigné par la référence 161, respectivement 162. La biellette 111, respectivement 112, est solidaire d'une demi-poulie verticale 121, respectivement 122, le premier point d'attache 151, respectivement 152, étant fixé à la périphérie de la poulie 121, respectivement 122, et le deuxième point d'attache 161, respectivement 162, coïncidant avec le centre de rotation de ladite poulie et son point de fixation au caisson de structure 14.

Les gaines 81 et 82 sont fixées sur la structure fixe 14 par des moyens 118 et 119 respectivement.

Le câble 71, respectivement 72, à l'intérieur de la gaine 81, respectivement 82, est croisé avec l'autre câble 72, respectivement 71, sous la pièce d'attache 4 de l'antenne 1 par rapport au plan de coupe P de la figure 2. Il passe par le point d'attache 151, respectivement 152, de la masse 10 à la tête de la biellette 111, respectivement 112, à la circonférence de laquelle il est fixé par des moyens 13.

Si l'on suppose que l'avion porteur vole normalement, le câble 71 est disposé autour de la partie supérieure de la poulie 6 et le câble 72 autour de la partie inférieure de la poulie 6. Après croisement, le câble 71 se retrouve en-dessous du câble 72 dans le plan vertical de coupe P. La structure étant symétrique, les rôles des câbles 71 et 72 sont inversés lorsque l'avion vole sur le dos.

Le système fonctionne de la façon suivante :

Dans le premier cas d'un vol normal de l'avion porteur, si le plan de symétrie (Δ, x'Ox) de l'ensemble d'antenne prend une inclinaison −θ (vers le bas) par rapport au plan (x'Ox, z'Oz), la poulie 6 tourne également d'un angle θ dans le sens inverse des aiguilles d'une montre. Le câble 72 fixé par les moyens 9 vient s'enrouler autour de la poulie sur une longueur égale à l'arc θ, en coulissant à l'intérieur de la gaine 82, alors que le câble 71 est relâché sur une longueur identique. Le câble 72 qui est donc le câble supérieur vient tirer la tête de biellette 152 et par conséquent déplace la masse 10 vers le haut. Le câble 71 accompagne et limite le mouvement puisque son point d'attache en 9 s'est déplacé d'une longueur correspondante. Inversement, si l'antenne est orientée de façon à ce que le plan de symétrie (Δ, x'Ox) fasse un angle +θ (vers le haut) par rapport au plan (x'Ox, z'Oz), la poulie 6 tourne d'un angle θ dans le sens des aiguilles d'une montre. Le câble 71 fixé par les moyens 9 vient s'enrouler autour de la poulie sur une longueur égale à l'arc θ, en coulissant à l'intérieur de la gaine 81, alors que le câble 72 est relâché sur une longueur identique. Le câble 71, qui est le câble inférieur, vient tirer la tête de biellette 151 et déplace par conséquent la masse 10 vers le bas. Le câble 72 accompagne le mouvement et le limite puisque son point d'attache 9 s'est déplacé d'une longueur égale à celle du point d'attache 9 du câble 71. Il aide également à supporter la masse 10.

Les rôles des câbles 71 et 72 sont inversés lorsque l'avion porteur vole sur le dos.

La masse d'équilibrage a donc un mouvement identique à celui de l'antenne.

Lorsque l'antenne débat autour de son axe, le couple de balourd est de la forme :

$$C = m \, \gamma \, d \cos \theta$$

où

m est la masse de l'antenne,
d la distance de son centre de gravité G à l'axe de rotation,
γ l'accélération au lieu considéré,
θ l'angle de débattement.

On recrée donc le même mouvement au niveau de la masse d'équilibrage en recréant un couple antagoniste de la forme :

$$C' = m' \, \gamma \, d' \cos \theta$$

où :

m' est la masse d'équilibrage (masse 10),
d' la distance du centre de gravité G' de la masse à son axe de rotation, donc la distance entre les axes de rotation 151, respectivement 152 à 161, respectivement 162, des têtes de chaque biellettes.

Les câbles 71 et 72 coulissant dans les gaines 81 et 82 respectivement équilibrent l'antenne grâce à un couple antagoniste C' égal au couple de balourd C.

Le système d'équilibrage est indépendant du sens de l'accélération, comme dans le cas d'un vol sur le dos par exemple, et de la valeur de l'accélération puisque celle-ci agit à la fois sur l'antenne et sur les masses d'équilibrage et n'affecte pas l'égalité des couples de balourd C et antagoniste C'.

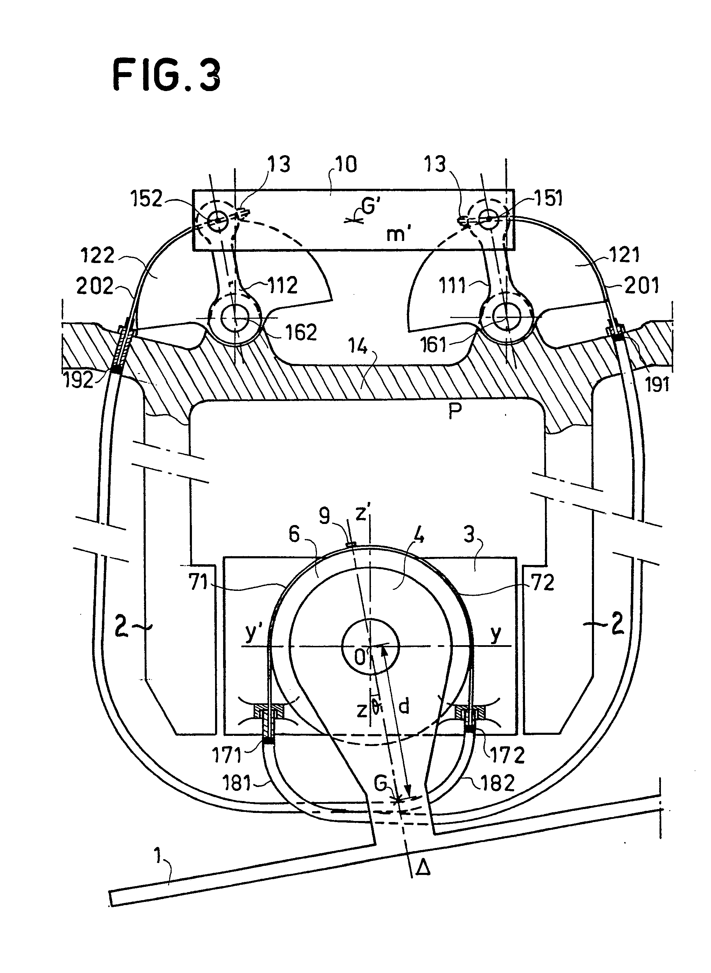

La figure 3 représente une variante du mode de réalisation préférentiel de la figure 2. Le principe de fonctionnement reste le même mais les câbles coulissant à l'intérieur de gaines sont remplacés par une liaison fluide, ce qui permet d'éliminer le frottement des câbles 71 et 72 dans leur gaine respective 81 et 82. Les mêmes références ont été utilisées pour la figure 3 que pour la figure 2 sauf en ce qui concerne les moyens de transmission 71, 72 et 81, 82. Les moyens de transmission utilisés sont des vérins hydrauliques. Lorsque l'antenne 1, donc la poulie 6 qui lui est solidaire, tourne d'un angle φ, les moyens de fixation 9 des cables 71 et 72 se déplacent à la périphérie de la poulie 6 sur une longueur d'arc correspondant à l'angle θ, + θ dans le sens direct ou − θ dans le sens inverse des aiguilles d'une montre suivant le sens de la rotation du plan de symétrie (Δ, x'Ox) par rapport au plan (x'Ox, z'Oz). Les câbles 71 et 72 agissent sur les pistons 171 et 172. Les différences de pression sont transmises, par l'intermédiaire des canalisations identiques de fluide 181 et 182 après le croisement de celles-ci au niveau de la pièce d'attache 4, aux pistons 191 et 192. Dans le cas d'une rotation de + θ, le câble 71 tire le piston 171, ce qui enfonce le piston 191 dans la canalisation 181 sur une longueur correspondante, et enfonce le piston 172, ce qui pousse le piston 192 vers l'intérieur de la canalisation 182 sur une longueur identique. La masse 10 est donc déplacée de façon antagoniste par l'intermédiaire des biellettes 111 et 112 sur la tête (désignée par son centre 151, respectivement 152) desquelles la pression de fluide transmise par les canalisations 181 et 182 et les pistons 191 et 192 agit par l'intermédiaire des câbles 201 et 202 fixés aux pistons 191, 192 respectivement, et aux têtes, de centre 151 et 152, de biellettes par les moyens 13.

Lorsque la rotation est de − θ, le rôle des câbles 71 et 72 ainsi que des pistons 171 et 172 est inversé.

## Revendications

1. Système d'équilibrage d'un couple de balourd pour un élément (1) disposé en porte à faux par rapport à un axe de rotation (0) fixe autour duquel il peut pivoter, comportant une masse d'équilibrage (10) placée à distance de la pièce d'attache (4) de cet élément à son axe de rotation et des moyens de transmission des mouvements de rotation de l'élément en porte à faux à la masse d'équilibrage, caractérisé en ce que ces moyens de transmission sont des liaisons souples qui imposent au centre de gravité de la masse d'équilibrage un mouvement de rotation autour d'un axe de rotation fixe et parallèle à l'axe de rotation de l'élément en porte à faux et suivant un déplacement angulaire opposé à celui du centre de gravité de l'élément en porte à faux.

2. Système d'équilibrage selon la revendication 1, caractérisé en ce que les moyens de transmission comportent un premier et un second dispositif de transmission provoquant des déplacements opposés du centre de gravité de la masse d'équilibrage (10) pour deux angles de rotation opposés du centre de gravité de l'élément (1) en porte à faux.

3. Système d'équilibrage selon l'une quelconque des revendications 1 et 2, caractérisé en ce que le premier dispositif de transmission comprend une poulie (6) solidaire de l'élément en porte à faux (1) et de même axe de rotation et un câble (71) fixé par une extrémité sur la poulie (6) qui vient s'enrouler ou se dérouler autour de ladite poulie selon le sens de rotation du centre de gravité dudit élément en porte à faux et agit sur la tête (151) d'une biellette qui en tournant autour d'un axe de rotation fixe et parallèle à l'axe de rotation dudit élément en porte à faux provoque le déplacement antagoniste du centre de gravité de ladite masse d'équilibrage.

4. Système d'équilibrage selon la revendication 3, caractérisé en ce que le câble (71) est directement relié par son autre extrémité à ladite tête (151) de biellette et coulisse dans une gaine (81).

5. Système d'équilibrage selon la revendication 3, caractérisé en ce que l'autre extrémité du câble (71) est reliée à un premier piston (171) dont le déplacement à l'intérieur d'une canalisation (181) remplie de fluide provoque le déplacement antagoniste d'un second piston (191) auquel est fixée la première extrémité d'un deuxième câble (201), l'autre extrémité dudit deuxième câble (201) étant raccordée à ladite tête (151) de biellette.

6. Utilisation du système selon l'une quelconque des revendications 2 à 5 pour équilibrer le balourd d'une antenne de radar aéroporté.

7. Antenne de radar aéroporté, caractérisée en ce que, l'antenne étant disposée en porte à faux par rapport à l'axe de rotation qui la porte, son balourd est équilibré par un système selon l'une quelconque des revendications 2 à 5.

8. Antenne de radar aéroporté selon la revendication 7, caractérisée en ce que la masse d'équilibrage et les biellettes qui la supportent sont disposés à l'intérieur de la partie fixe de la mécanique d'antenne.

## Claims

1. Balancing system for the unbalance moment of a member (1) which is cantilevered with respect to a fixed rotary axis (0) about which it may pivot, comprising a balancing mass (10) spaced from the attachment part (4) fixing this member to its rotary axis and means for the transmission of the rotary movements of the cantilevered member to the balancing mass, characterized in that these transmission means are flexible connections forcing the center of gravity of the balancing mass to perform a rotary movement about a fixed rotary axis which is parallel to the rotary axis of the cantilevered member and along an angular displacement opposite to that of the center of gravity of the cantilevered member.

2. Balancing system according to claim 1, characterized in that the transmission means comprise first and second transmission devices causing opposed displacements of the center of gravity of the balancing mass (10) for two opposed angles of rotation of the center of gravity of the cantilevered member (1).

3. Balancing system according to any of claims 1 and 2, characterized in that the first transmission device comprises a pulley (6) secured to the cantilevered member (1) and having the same rotary axis and a cable (71) attached at one end to the pulley (6) and which is wound around or unwound from said pulley according to the rotary direction of the center of gravity of said cantilevered member, and acts on the head (151) of a connecting-rod which, rotating about a fixed rotary axis which is parallel to the rotary axis of said cantilevered member, causes an opposite displacement of the center of gravity of said balancing mass.

4. Balancing system according to claim 3, characterized in that the cable (71) is directly connected by its other end to said connecting-rod head (151) and slides within a sleeve (81).

5. Balancing system according to claim 3, characterized in that the other end of the cable (71) is connected to a first piston (171) the displacement of which inside a channel (181) filled with a fluid causes the opposite displacement of a second piston (191) whereto the first end of a second cable (201) is secured, the other end of said second cable (201) being connected to said connecting-rod head (151).

6. Use of the system according to any of claims 2 to 5 for the balancing of the unbalance of an airborne radar antenna.

7. Airborne radar antenna, characterized in that the antenna being cantilevered with respect to its supporting rotary axis, its unbalance is balanced by a system according to any of claims 2 to 5.

8. Airborne radar antenna according to claim 7, characterized in that the balancing mass and the connectingrods carrying it are located inside the fixed part of the mechanic antenna structure.

**Patentansprüche**

1. Ausgleichsystem für ein Unwuchtmoment an einem Element (1), welches freitragend in bezug auf eine feste Drehachse (0) angeordnet ist, um welche es verschwenkbar ist, mit einer Ausgleichsmasse (10), die im Abstand von dem Befestigungsteil (4) zur Befestigung dieses Elementes an seiner Drehachse angeordnet ist, und mit Einrichtungen zur Übertragung der Drehbewegungen des freitragenden Elementes auf die Ausgleichsmasse, dadurch gekennzeichnet, daß diese Übertragungseinrichtungen flexible Verbindungen sind, welche im Schwerpunkt der Ausgleichsmasse eine Drehbewegung erzwingen, um eine feste, zur Drehachse des freitragenden Elementes parallele Achse und mit einer Winkelbewegung, die entgegengesetzt zu der des Schwerpunktes des freitragenden Elementes ist.

2. Ausgleichsystem nach Anspruch 1, dadurch gekennzeichnet, daß die Übertragungseinrichtungen eine erste und eine zweite Übertragungsvorrichtung umfassen, welche entgegengesetzte Bewegungen des Schwerpunktes der Ausgleichsmasse (10) für zwei entgegengesetzte Drehwinkel des Schwerpunktes des freitragenden Elementes (1) hervorrufen.

3. Ausgleichsystem nach einem der Ansprüche 1 und 2, dadurch gekennzeichnet, daß die erste Übertragungsvorrichtung eine Rolle (6) umfaßt, welche fest mit dem freitragenden Element (1) verbunden ist und dieselbe Drehachse aufweist, und ein Seil (71) umfaßt, das an einem Ende an der Rolle (6) befestigt ist und je nach Drehrichtung des Schwerpunktes des genannten freitragenden Elementes auf die Rolle aufgerollt oder von ihr abgerollt wird sowie auf den Kopf (151) eines Pleuels einwirkt, welches unter Drehung um eine feste und zur Drehachse des genannten freitragenden Elementes parallele Achse die entgegengesetzte Bewegung des Schwerpunktes der genannten Ausgleichsmasse hervorruft.

4. Ausgleichsystem nach Anspruch 3, dadurch gekennzeichnet, daß das Seil (71) direkt an seinem anderen Ende mit dem genannten Kopf (151) eines Pleuels verbunden ist und in einer Hülle (81) gleitet.

5. Ausgleichsystem nach Anspruch 3, dadurch gekennzeichnet, daß das andere Ende des Seiles (71) mit einem ersten Kolben (171) verbunden ist, dessen Bewegung im Inneren eines Kanales (181), der mit einem fluiden Medium ausgefüllt ist, die entgegengesetzte Bewegung eines zweiten Kolbens (191) hervorruft, an welchem das erste Ende eines zweiten Seiles (201) befestigt ist, wobei das andere Ende dieses zweiten Seiles (201) an den genannten Kopf (151) eines Pleuels angeschlossen ist.

6. Verwendung des Systems nach einem der Ansprüche 2 bis 5 zum Ausgleichen der Unwucht einer in Flugzeugen mitgeführten Radarantenne.

7. An Bord von Flugzeugen mitzuführende Radarantenne, dadurch gekennzeichnet, daß die Unwucht der Antenne, die freitragend in bezug auf die sie tragende Drehachse angeordnet ist, durch ein System nach einem der Ansprüche 2 bis 5 ausgeglichen ist.

8. An Bord von Flugzeugen mitzuführende Radarantenne nach Anspruch 7, dadurch gekennzeichnet, daß die Ausgleichsmasse und die sie tragenden Pleuel im Inneren des feststehenden Teiles der Antennenmechanik angeordnet sind.

# FIG.1

# FIG_2

# FIG.3